# EUROPÄISCHE PATENTSCHRIFT

(11) **EP 0 699 223 B1**
(45) Veröffentlichungstag und Bekanntmachung des Hinweises auf die Patenterteilung: **26.02.1997**
(21) Anmeldenummer: 94915135.1
(22) Anmeldetag: 28.04.1994
(51) Int. Cl.: C10B 1/04, C10B 53/02

(54) **ANLAGE UND VERFAHREN ZUM THERMISCHEN BEHANDELN VON KOHLENSTOFFHALTIGEM MATERIAL**
PROCESS AND PLANT FOR THERMAL TREATMENT OF CARBON-CONTAINING MATERIAL
PROCEDE ET INSTALLATION DE TRAITEMENT THERMIQUE DE MATERIAU CARBONE

(30) Priorität: 18.05.1993 DE 4317411; 18.05.1993 DE 4317413
(43) Veröffentlichungstag der Anmeldung: 06.03.1996
(73) Patentinhaber: kapak GmbH - Gesellschaft für Karbonisierung, Pyrolyse, Aktivierung -, 13088 Berlin (DE)
(72) Erfinder: BORN, Manfred, D-09599 Freiberg (DE); SCHULTZE, Karl-Michael, D-12161 Berlin (DE); KEMPE, Friedhelm, D-14167 Berlin (DE)
(74) Vertreter: Schneider, Henry
(86) Internationale Anmeldenummer: EP9401335
(87) Internationale Veröffentlichungsnummer: WO9426842

(56) Entgegenhaltungen:
- EP-A- 0 070 710
- DE-A- 3 941 557
- DE-C- 144 946
- DE-C- 345 967
- GB-A- 199 929

## Beschreibung

Die Erfindung betrifft eine Anlage und ein Verfahren zum thermischen Behandeln von kohlenstoffhaltigem Material in einem mit Wärmeenergie beaufschlagbaren Schachtofen nach dem Oberbegriff der Ansprüche 1 und 15.

Es ist bekannt, kohlenstoffhaltiges Material in mit Wärmeenergie beaufschlagbaren Schachtöfen zu behandeln und im Ergebnis dessen Holzkohle oder Aktivkohle herzustellen. Zur Herstellung von Holzkohle oder Aktivkohle sind bereits Schachtöfen bekannt, die diskontinuierlich mit kohlenstoffhaltigen Ausgangsstoffen beschickt werden, die nach Erreichen eines bestimmten Füllungsgrades der thermischen Behandlung unterworfen werden. Dabei werden dem Schachtofen Wärmeenergie und die für die Behandlung notwendigen Prozeßgase über geeignete Einlaßöffnungen zugeführt. Sowohl die Wärmeenergie als auch die Prozeßgase durchströmen dabei das kohlenstoffhaltige Material innerhalb des Schachtofens in der Regel im Gegenstrom, so daß überschüssige Wärmeenergie und Prozeßabgase am oberen Ende des Schachtofens herausgeführt werden müssen. Diese bekannten Schachtöfen besitzen den Nachteil, daß das zu behandelnde kohlenstoffhaltige Ausgangsmaterial über einen für die Pyrolyse und/oder Aktivierung erforderlichen Gesamtzeitraum in dem Schachtofen verbleiben muß und erst nach Abschluß der Behandlung der gesamte Schachtofen entleert werden kann. Für eine neue Charge ist dann jedesmal eine Neubefüllung des Schachtofens notwendig. Weiterhin ergeben sich durch die gemeinsame Führung der Wärmeenergie und der Prozeßgase durch das kohlenstoffhaltige Ausgangsmaterial Schwierigkeiten bei der Prozeßführung, die zu einem nicht gleichmäßigen Endzustand des behandelten kohlenstoffhaltigen Materials führen. Weiterhin ist bereits vorgeschlagen worden, innerhalb des Schachtofens Führungsbleche anzuordnen, die ermöglichen sollen, daß einmal eingefülltes kohlenstoffhaltiges Material während der thermischen Behandlung in einer bestimmten Höhe des Schachtofens aufgehalten werden kann und somit erreicht werden soll, daß das kohlenstoffhaltige Material in der bestimmten Höhe einer ausreichenden Wärmebehandlung unterzogen werden kann, so daß ungleichmäßige Qualitäten beim Austrag vermieden werden können. Diese Schachtöfen haben neben dem komplizierten Aufbau, der darüber hinaus nur bei sehr großen Einheiten eingesetzt werden kann, den Nachteil, daß die Führungsflächen regelmäßig zu Brückenbildungen führen, die den ganzen Prozeß der thermischen Behandlung behindern.

Aus der DE-A 39 41 557 ist ein indirekt beheizbarer Pyrolysereaktor bekannt, der eine Vielzahl von vertikal angeordneten Reaktoren aufweist. Diese sind über eine Einführeinrichtung mit kohlenwasserstoffhaltigen Materialien beschickbar. Die vertikal angeordneten Reaktoren sind zonenweise geregelt indirekt beheizbar und über die Länge der Reaktoren mit einer Vielzahl von Auslaßöffnungen für einen Pyrolysegasabzug versehen. Die Prozeßabgase werden an den einzelnen Auslaßöffnungen entnommen und einer Sammelleitung zugeführt.

Ferner ist aus der GB-A-199 922 eine Vorrichtung zur Herstellung von Gas bekannt, bei der mehrere vertikal angeordnete Reaktoren vorgesehen sind.

Der Erfindung liegt die Aufgabe zugrunde, eine Anlage der gattungsgemäßen Art zu schaffen, mit der in einfacher Weise eine kontinuierliche thermische Behandlung von kohlenstoffhaltigem Material, vorzugsweise zur Herstellung von Holzkohle und/oder Aktivkohle möglich ist und sich durch ein Höchstmaß an Umweltverträglichkeit auszeichnet, und ein Verfahren zum thermischen Behandeln anzugeben.

Diese Aufgabe wird erfindungsgemäß durch die im Anspruch 1 genannten Merkmale gelöst.

Es wurde gefunden, daß die Reaktoren (Reaktionsrohre) autark zu betreibende Einheiten bilden, deren Auslaßöffnungen für Prozeßabgase in einem gemeinsamen Gassammelraum münden, der Gassammelraum (41) mit einer Brennkammer verbunden ist, die zum gemeinsamen Beheizen aller Reaktionsrohre wenigstens eines Schachtofens mit einem Bereich des Schachtofens verbunden ist, der der indirekten Beheizung der Reaktionsrohre dient, neben einer kontinuierlichen thermischen Behandlung der kohlenstoffhaltigen Materialien in getrennten Reaktoren ein schadstoffarmer Betrieb der gesamten Anlage durchgeführt werden kann. Damit bietet sich die Möglichkeit einer gleichmäßigen gesteuerten Prozeßführung, die auf optimale Produktausbeute, homogene Produktqualität und gleichmäßig geringe Emission ausgerichtet ist. Weiterhin können mit einer derartig aufgebauten Anlage auch kohlenstoffhaltige Materialien in geringen Mengen thermisch behandelt werden. Gerade diese Möglichkeit bietet den Vorteil, eine derartige Anlage schnell und problemlos in der Nähe des Anfalls des benötigten kohlenstoffhaltigen Materials, das insbesondere Laubholzstücken oder Laubholzhackschnitzel aber auch andere Materialien, wie beispielsweise Kokosnußschalenkoks, Erdnußschalenkoks, Bambus oder ähnliches sein können.

In bevorzugter Ausgestaltung der Erfindung ist vorgesehen, daß der Schachtofen zwei bis fünfzehn, vorzugsweise fünf bis zehn, insbesondere acht Reaktoren besitzt. Somit ist sehr vorteilhaft möglich, daß in einem einzigen Schachtofen mehrere kleinere, vollkommen getrennt aufgebaute Reaktoren angeordnet sein können, so daß es sehr vorteilhaft möglich ist, in jedem der einzelnen Reaktoren innerhalb eines Schachtofens, beispielsweise bei einer gemeinsamen Beaufschlagung aller Reaktoren eines Schachtofens mit wenigstens einer gemeinsamen Wärmeenergiequelle, unterschiedliche Chargen von Holz- und/oder Aktivkohlen herzustellen und diese in einfacher Weise durch eine Prozeßführung, beispielsweise die Einstellung der Verweilzeit des kohlenstoffhaltigen Materials, in einem Reaktor eingestellt werden können.

In weiterer bevorzugter Ausgestaltung der Erfindung ist vorgesehen, daß die Reaktoren Reaktionsrohre sind, die über ein Übergangsrohr mit der Verteilung in Verbindung stehen und die bevorzugterweise zylindrisch oder mit einer konischen Erweiterung ausgebildet sind. Diese Ausgestaltung der Reaktoren erlaubt es, innerhalb eines Schachtofens eine Anzahl von einzelnen als Reaktionsrohre ausgebildeten Reaktoren beabstandet zueinander anzuordnen, und trotzdem innerhalb des Schachtofens vorzugsweise eine gemeinsame Beaufschlagung der Reaktionsrohre mit Wärmeenergie durchzuführen, so daß eine indirekte thermische Behandlung des in den Reaktionsrohren eingefüllten kohlenstoffhaltigen Materials erfolgen kann. Durch die Ausbildung als Reaktionsrohre wird gleichzeitig erreicht, daß auf einem möglichst geringen Raum eine relativ große Anzahl einzelner Reaktoren angeordnet werden kann.

In weiterer bevorzugter Ausgestaltung der Erfindung ist vorgesehen, daß der Schachtofen drei axiale Bereiche aufweist, die vorzugsweise durch waagerechte, zur Aufnahme der Reaktionsrohre Durchgangsöffnungen aufweisende Zwischenböden gebildet sind, die die Reaktionsrohre in ihrer Höhe übergreifen. Damit wird erreicht, daß die Reaktionsrohre bzw. die Reaktoren in unterschiedliche thermische Bereiche einteilbar sind, in denen gleichzeitig eine Trocknung und/oder Pyrolyse und/oder Aktivierung des kohlenstoffhaltigen Materials (Erzeugung von Aktivkohle) erfolgen kann und damit diese unterschiedlichen Prozesse miteinander gekoppelt werden können. Vorteilhafterweise wird damit erreicht, daß diese Vorgänge unabhängig voneinander steuerbar und damit leicht zu beherrschen sind. Durch diese Prozeßkopplung der einzelnen Prozeßstufen Trocknung, Pyrolyse und Aktivierung in einem durchgehenden Reaktionsrohr bzw. Reaktor, der drei thermische Bereiche aufweist, ist in einfacher Weise eine kontinuierliche Fahrweise der gesamten Anlage möglich. Diese Fahrweise wird dadurch erreicht, daß in Abhängigkeit von über die Auslaßeinrichtung für das behandelte kohlenstoffhaltige Material der Reaktoren bestimmte Auslaßmengen entnommen werden, eine entsprechende Menge kohlenstoffhaltiges Ausgangsmaterial über die Einführeinrichtung bzw. die Eintragsschleuse und die Verteilrinne zugeführt werden kann.

Weitere bevorzugte Ausgestaltungen der Anlage ergeben sich aus den übrigen in den Unteransprüchen genannten Merkmalen.

Die Aufgabe wird weiterhin durch die im Anspruch 15 genannten Merkmale gelöst. Dadurch, daß die Reaktoren (Reaktionsrohre) getrennt mit dem kohlenstoffhaltigen Material beschickt werden und daß während der Behandlung des kohlenstoffhaltigen Materials anfallendes gas- und dampfförmiges Prozeßabgas aller Reaktionsrohre gesammelt und sofort energetisch zur Beheizung der Reaktionsrohre und zur Bereitstellung der Prozeßgase verwertet wird, ist es vorteilhaft möglich, durch eine einfache Verfahrenssteuerung sowohl die Pyrolyse, also die Holzverkohlung, als auch die Aktivierung der Holzkohle in einem einzigen Reaktor durchzuführen und gleichzeitig die Möglichkeit besteht, eine gleichmäßig gesteuerte Prozeßführung, die auf optimale Produktausbeute, homogene Produktqualität und gleichmäßig geringe Emission ausgerichtet ist, zu erreichen. Da bei einer Weiterführung des Verfahrens bis zur Erzeugung von Aktivkohle keine Zwischenkühlung des kohlenstoffhaltigen Materials nach der Verkohlung erfolgen muß, bietet die Prozeßkopplung erhebliche Vorteile in der Energiebilanz und kann mit dem Energieinhalt des kohlenstoffhaltigen Materials ohne Fremdenergie betrieben werden. Ein geringer Fremdenergieeinsatz ist lediglich beim Anfahren der Anlage notwendig.

Insbesondere dadurch, daß die Wärmeenergie durch Verbrennen von Prozeßabgasen und/oder von in den Prozeßabgasen enthaltenen Bestandteilen in einer Brennkammer gewonnen wird, wobei vorzugsweise die Prozeßabgase beziehungsweise die Bestandteile sofort nach Verlassen der Reaktoren luftüberschüssig verbrannt werden, wird ein sofortiges Verbrennen der Prozeßabgase unmittelbar nach Austritt aus dem Reaktor erreicht, so daß eine thermische Beseitigung sämtlicher brennbarer und umweltbelastender gasförmiger und kondensierbarer Produkte erfolgt und der Energiegehalt der gasförmigen und kondensierbaren Produkte in den Prozeßabgasen für die Gewinnung der Wärmeenergie des Prozesses genutzt werden kann. Die Nutzung des gebundenen und fühlbaren Energieinhaltes der gas- und dampfförmigen Pyrolyseprodukte wird also mit der Reinigung der Prozeßabgase verfahrenstechnisch verknüpft.

Weiterhin ist vorteilhaft, daß diejenigen gasförmigen Komponenten direkt nach dem Austritt aus dem Reaktor beseitigt werden, die in höheren Konzentrationen ein explosionsfähiges Gemisch bilden können und auf ihrem Weg durch längere Rohrleitungen Sicherheitsvorkehrungen gegen Sauerstoffeinbruch und Zündquellen erfordern würden. Darüber hinaus wird eine Kondensation von Teeren und Ölen aus den flüchtigen Bestandteilen des kohlenstoffhaltigen Materials vermieden und damit eine saubere Betriebsführung erreicht. Dies ist dadurch gewährleistet, daß vorzugsweise der Strömungswiderstand der Prozeßabgase bzw. des daraus erzeugten Heizgases am Prozeßende durch ein Saugzuggebläse überwunden wird. Unter Heizgase werden im Sinne der Erfindung die heißen Gase verstanden, die von der Brennkammer die Wärmeenergie in den Schachtofen transportieren. Dadurch können keine Teer-ÖlKondensate abgeschieden werden und die Anlagenteile stehen unter einem Unterdruck, so daß keine Emissionen auftreten können. Dadurch, daß die Prozeßabgase bzw. die darin enthaltenen Bestandteile einen sehr hohen Heizwert besitzen, kann eine für die Prozeßführung ausreichende Wärmeenergie zur Verfügung gestellt werden. Die Prozeßabgase werden nicht durch Stickstoff verdünnt, wie das bei direkter Beheizung mit Spülgasen der Fall ist.

In weiterer bevorzugter Ausgestaltung der Erfindung ist vorgesehen, daß die durch die Verbrennung der Prozeßabgase erzeugten Heizgase innerhalb des Schachtofens auf die Reaktoren geführt werden und zu einer indirekten Beheizung der Reaktoren benutzt werden. Durch diese Ausgestaltung kann sehr vorteilhaft erreicht werden, daß eine sichere Verbrennung der Gaskomponenten unter gezielt eingestelltem Luftüberschuß und damit unter Vermeidung einer Nachbrennkammer zum Ausbrand von Überschußgasen geführt werden kann. Diese Überschußgase würden die Gasmenge enthalten, die nicht als Heizgas in den Schachtofen zurückgeführt werden braucht. Durch die indirekte Beheizung der Reaktoren wird weiterhin sehr vorteilhaft erreicht, daß eine Kopplung der Prozesse der Pyrolyse und/oder Aktivierung und deren Wärmeversorgung erfolgt. Hiermit werden beide Vorgänge unabhängig voneinander steuerbar und damit für den Einsatz des Verfahrens leichter beherrschbar.

In bevorzugter Ausgestaltung des Verfahrens ist vorgesehen, daß die Verbrennung in der Brennkammer unter einer Luftstufung erfolgt. Hiermit wird sehr vorteilhaft vermieden, daß sowohl aus dem Holzstickstoff als auch aus dem Stickstoff der Verbrennungsluft Stickoxide gebildet werden. Damit wird eine weitere, beim Betrieb von Gasbrennkammern übliche Emissionsquelle vermieden. Die thermischen Stickoxide, die insbesondere bei einem Ausbrand von Kohlenwasserstoffen, die mit dem Teer in die Brennkammer gelangen, zu einer hohen Emission führen würden, werden durch den stufenweise einstellbaren Luftüberschuß auf ein Minimum reduziert und gleichzeitig wird die Bildung von Kohlenmonoxid vermieden, so daß mit hoher Sicherheit die Umwelt belastenden Grenzwerte unterschritten werden.

Weiterhin ist durch die indirekte Beheizung der Reaktoren durch die in den Schachtofen geführten Heizgase möglich, den Schachtofen in seiner gesamten Höhe mit Heizgas zu beaufschlagen, so daß auch am Kopf des Schachtofens auf eine hohe Prozeßabgasaustrittstemperatur Einfluß genommen werden kann. Diese hohe Gasaustrittstemperatur verhindert ein Kondensieren der in den Prozeßabgasen (Pyrolysegasen) enthaltenen Teere, bis diese die Brennkammer erreicht haben.

In besonders bevorzugter Ausgestaltung des Verfahrens ist vorgesehen, daß die Heizgase derart auf den Schachtofen geführt werden, daß in verschiedenen Zonen des Schachtofens eine Trocknung und/oder eine Pyrolyse und/oder eine Aktivierung des kohlenstoffhaltigen Materials erfolgt. Durch eine derartige Beaufschlagung des Schachtofens ist eine Prozeßkopplung der einzelnen Prozeßstufen Trocknung, Pyrolyse und Aktivierung in einem kontinuierlichen Prozeß möglich. Das bei der Aktivierung und der Pyrolyse aus dem kohlenstoffhaltigen Material und einem eingebrachten Prozeßgas (Aktivierungsgas) entstehende Prozeßabgas steigt in dem Reaktor im Gegenstrom zum kohlenstoffhaltigen Material auf. Da das kohlenstoffhaltige Material mit Umgebungstemperatur in den Reaktor eingebracht wird und während seiner Abwärtsbewegung auf die Pyrolyse- bzw. Aktivierungstemperatur aufgeheizt wird, fungiert das aufsteigende Prozeßgas beziehungsweise Prozeßabgas als Wärmeträger und ermöglicht einen optimalen Wärmehaushalt. Durch diese Prozeßführung stellen sich über der Reaktorhöhe Zonen gleicher physikalisch/chemischer Vorgänge ein, deren horizontale Ausrichtung durch die Zuführung der Heizgase in den Schachtofen leicht zu steuern ist. Je kleiner der Reaktorquerschnitt gewählt ist, um so besser kann auf die horizontale Ausrichtung Einfluß genommen werden und im Reaktorquerschnitt eine homogene Temperatur als Basis für eine einheitliche Produktqualität erzielt werden.

Somit ist eine Anlage beziehungsweise ein Verfahren zum kontinuierlichen thermischen Behandeln von kohlenstoffhaltigem Material geschaffen, bei dem die eigentliche Behandlung der kohlenstoffhaltigen Materialien, die Verwertung der während der Behandlung entstehenden Prozeßabgase, die Energiebereitstellung für die Beheizung der Reaktoren und die Erzeugung der Prozeßgase prozeßtechnisch miteinander gekoppelt sind, das heißt, die einzelnen Anlagenteile eine prozeßgekoppelte Einheit bilden. Hierdurch wird es sehr vorteilhaft möglich, die einzelnen Reaktoren trotz ihrer prozeßtechnischen Kopplung als autarke Einheiten zu betreiben, in denen vorzugsweise gleichzeitig unterschiedliche Chargen von behandeltem kohlenstoffhaltigen Material erzeugt werden können und die trotzdem einer gleichmäßigen gesteuerten Prozeßführung, die auf optimale Produktausbeute, homogene Produktqualität und gleichmäßig geringe Emission ausgerichtet ist, unterliegen.

Insbesondere durch die geschaffene Möglichkeit, die während der Behandlung anfallenden Prozeßabgase aller Reaktoren zu sammeln und diese unmittelbar nach ihrem Entstehen der Brennkammer zuzuführen und dort die für für die Aufheizung der Reaktionsrohre benötigte Heizenergie zu erzeugen, wird ein in sich geschlossener Kreislauf geschaffen, der eine thermische Beseitigung sämtlicher brennbarer und umweltbelastender gasförmiger und kondensierbarer Produkte ermöglicht und den Energiegehalt der gasförmigen und kondensierbaren Produkte für die Gewinnung der Heizenergie des Prozesses nutzt. Es erfolgt somit sehr vorteilhaft eine Kopplung der Nutzung des Energieinhaltes der gas- und dampfförmigen Produkte der Behandlung der kohlenstoffhaltigen Ausgangsmaterialien mit der Reinigung der Prozeßabgase. Weiterhin ist es vorteilhaft möglich, die bei der Verbrennung der Prozeßabgase gewonnene Energie gleichzeitig zur Bereitstellung der Prozeßgase, beispielsweise Wasserdampf, für die Behandlung der kohlenstoffhaltigen Ausgangsmaterialien zu nutzen.

Somit wird insgesamt eine Anlage und ein Verfahren geschaffen, das innerhalb kürzester Zeit nach dem Anfahren der Anlage vollkommen autark, das heißt, im wesentlichen ohne weitere Zuführung äußerer Heizenergie, auskommt. Darüber hinaus zeichnet sich die Anlage durch die vollständige Verwertung der in den Prozeßabgasen vorhandenen schadstoffbelasteten Bestandteile für den eigenen kontinuierlichen Prozeß der Behandlung des kohlenstoffhaltigen Ausgangsmaterials durch eine äußerst geringe Schadstoffemission und damit sehr hoher Umweltverträglichkeit aus.

Die Erfindung wird nachfolgend in einem Ausführungsbeispiel anhand der zugehörigen Zeichnungen näher erläutert. Es zeigen:
- Figur 1: eine Seitenansicht einer Anlage zum thermischen Behandeln von kohlenstoffhaltigem Material im Teilschnitt;
- Figur 2: eine Draufsicht gemäß Figur 1 im Schnitt und
- Figur 3: den schematischen Aufbau der in den Figuren 1 und 2 gezeigten Anlage.

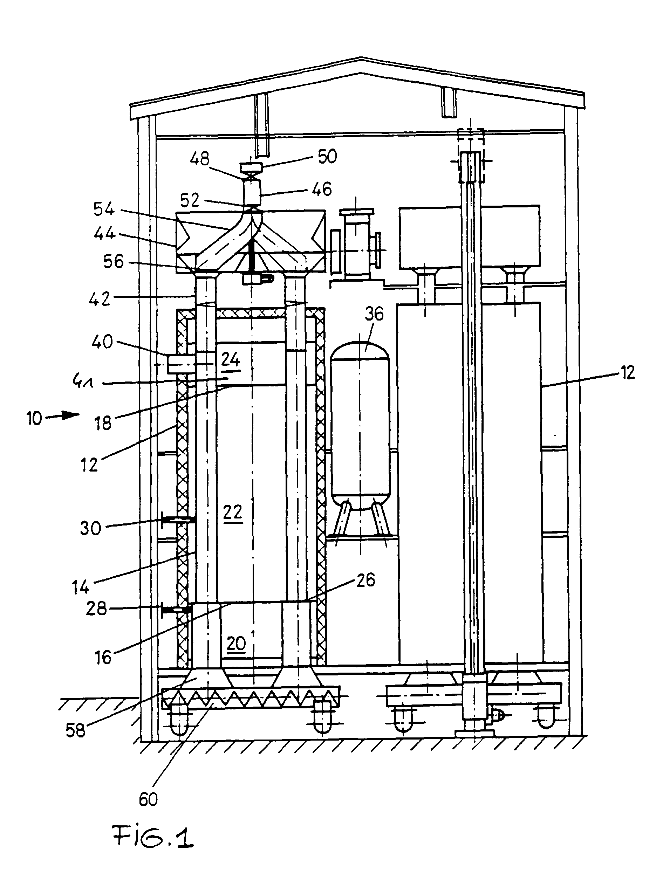

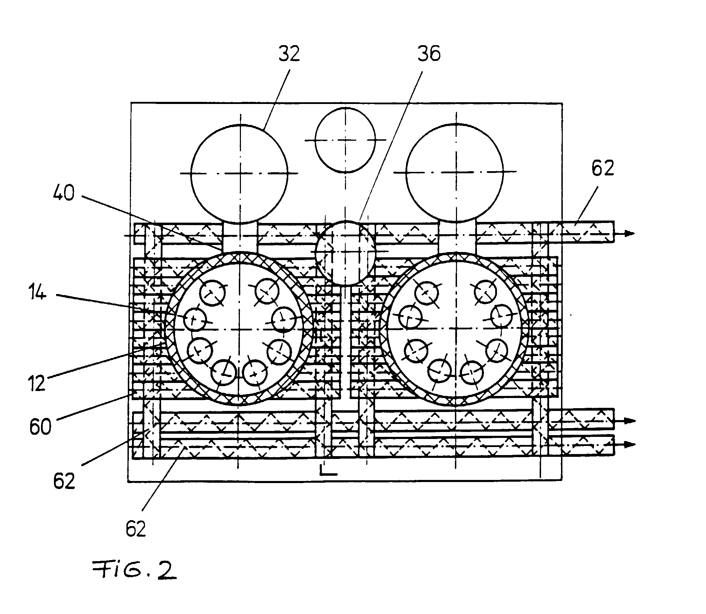

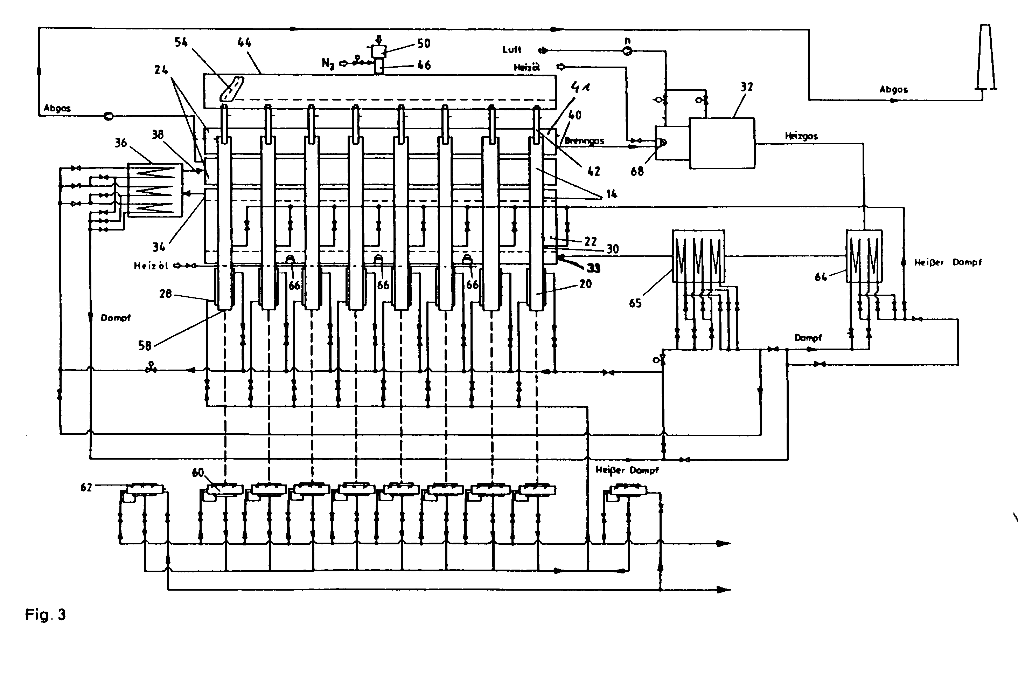

In Figur 1 ist eine allgemein mit 10 bezeichnete Anlage zum thermischen Behandeln von kohlenstoffhaltigem Material gezeigt. Die Anlage 10 besitzt zwei Schachtöfen 12, wobei der Aufbau im nachfolgenden nur anhand eines Schachtofens 12 näher erläutert wird. Der Schachtofen 12 weist in seinem Inneren achsparallel angeordnete, als Reaktoren dienende Reaktionsrohre 14 auf. Der Schachtofen 12 weist weiterhin Zwischenböden 16 und 18 auf, die den Reaktor in die Bereiche 20, 22 und 24 aufteilen. Die Zwischenböden 16 und 18 besitzen Durchgangsöffnungen 26, durch die die Reaktionsrohre 14 hindurchgeführt sind. Innerhalb des Bereiches 20 sind die Reaktionsrohre 14 doppelwandig ausgeführt und besitzen eine Einlaßöffnung 28 für die Zuführung eines Kühlmediums, insbesondere Wasser. Innerhalb des Bereiches 22 besitzen die Reaktionsrohre 14 eine Einlaßöffnung 30 für Prozeßgase, insbesondere Heißdampf. Der Bereich 22 des Schachtofens 12 ist weiterhin über eine hier nicht dargestellte Brennkammer 32 (Figur 2) mit Wärmeenergie beaufschlagbar. Der Bereich 22 besitzt weiterhin eine hier nicht dargestellte Auslaßöffnung 34 (Figur 3), die mit einem Wärmetauscher 36 in Verbindung steht. Der Bereich 24 des Schachtofens 12 besitzt eine ebenfalls nicht dargestellte Einlaßöffnung 38 (Figur 3), die mit dem Wärmetauscher 36 in Verbindung steht.

Weiterhin besitzt der Bereich 24 eine Auslaßöffnung 40, die einen Gassammelraum 41 für Prozeßabgase mit der Brennkammer 32 verbindet. Der Gassammelraum 41 steht dabei in Verbindung mit den Reaktionsrohren 14 und dient der Abführung der anfallenden Prozeßabgase. Oberhalb des Schachtofens 12 enden die Reaktionsrohre 14 in einem Übergangsrohr 42, das mit einer Verteilung 44 in Verbindung steht. Der Verteilung 44 zugeordnet ist eine Eintragschleuse 46, deren Schleuseneingang 48 mit einer Zuführung 50 und deren Schleusenausgang 52 mit der Verteilung 44 in Verbindung steht. Der Schleuseneingang 48 und der Schleusenausgang 52 weisen dabei hier nicht dargestellte, als gasdichte Schieber ausgebildete Absperrorgane auf. Innerhalb der Verteilung 44 ist eine Verteilerrinne 54 angeordnet, die an der Eintragschleuse 46 schwenkbar angelenkt ist, und deren Auslaß 56 den einzelnen Ubergangsrohren 42 zuordenbar ist. Die Reaktionsrohre 14 besitzen unterhalb des Bereiches 20 eine Auslaßeinrichtung 58, wobei jede Auslaßeinrichtung 58 eines Reaktionsrohres 14 einer eigenen reversierbaren Austragsschnecke 60 zugeordnet ist.

In der in Figur 2 gezeigten Draufsicht wird der Aufbau der Anlage 10 weiter verdeutlicht. Gleiche Teile wie in Figur 1 sind mit gleichen Bezugszeichen versehen und nicht nochmals erläutert.

In der Figur 2 wird deutlich, daß die beiden Schachtöfen 12 identisch aufgebaut sind und im Innern auf einer Kreisbogenlinie angeordnet jeweils acht Reaktionsrohre 14 enthalten. Jedem dieser Reaktionsrohre 14 ist an dem bereits in Figur 1 erwähnten unteren Auslaß eine Austragsschnecke 60 zugeordnet. Die Austragsschnecken 60 sind mit Sammelschnecken 62 verbunden, die zu einem hier nicht dargestellten Sammelplatz führen.

In der in Figur 3 gezeigten schematischen Übersicht sind nochmals die acht Reaktionsrohre 14 gezeigt, die die bereits in den Figuren 1 und 2 erwähnte Ausgestaltung besitzen. Anhand der schematischen Übersicht in Figur 3 wird die Funktion der Anlage 10 gemäß der nachfolgenden Erläuterung besonders deutlich. Gleiche Teile wie in den Figuren 1 und 2 sind wiederum mit gleichen Bezugszeichen versehen.

Die in den Figuren 1 bis 3 gezeigte Anordnung 10 übt folgende Funktion aus:

Das kohlenstoffhaltige Ausgangsmaterial wird beispielsweise als Laubholzstücken in der für eine Holzkohle und/oder Aktivkohleherstellung notwendigen Größe bereitgestellt und mit Hilfe eines nicht dargestellten Förderers der Zuführung 50 bzw. der Eintragschleuse 46 zugeführt. Der Eintragschleuse 46 wird diskontinuierlich eine Holzmenge direkt zugeführt, die einer möglichen Nachfüllmenge eines Reaktionsrohres 14 entspricht. Der Förderer arbeitet also nur nach Abruf durch eine Füllstandskontrolle, die beispielsweise innerhalb der Übergangsrohre 42 angeordnet ist und in den Figuren 1 bis 3 nicht dargestellt ist.

Die Eintragschleuse 46 hat dabei neben der Dosierung des kohlenstoffhaltigen Ausgangsmaterials eine Abdichtung der Reaktionsrohre 14 gegenüber der Umgebung zur Aufgabe. Das Volumen der Eintragschleuse ist dabei vorzugsweise um 30 % größer als das je Füllzyklus zu dosierende Einsatzgut, damit der Schleuseneingang 48 nicht durch Überfüllung verklemmen kann. Die Eintragschleuse 46 besteht beispielsweise aus einem zylindrischen Rohr. Der Schleuseneingang 48 und der Schleusenausgang 52 weisen dabei als gasdichte Schieber ausgebildete Absperrorgane auf, die beispielsweise mechanisch angetrieben werden und über eine Sicherung gegen Überlastung verfügen. Im Betrieb des Reaktors bzw. der Reaktionsrohre 14 sind die Schieber gegen gleichzeitiges Öffnen gesichert.

Die Befüllung des Reaktors bzw. der Reaktionsrohre 14 wird nunmehr folgendermaßen durchgeführt. Der im Schleuseneingang 48 angeordnete Schieber wird geöffnet, wenn sichergestellt ist, daß der im Schleusenausgang 52 angeordnete Schieber geschlossen ist. Über den Förderer wird die Eintragschleuse 46 mit einer Menge an Holzstücken oder Hackschnitzeln gefüllt, die beispielsweise 70 % des Schleusenvolumens entsprechen. Nunmehr wird der im Schleuseneingang 48 angeordnete Schieber geschlossen, während der im Schleusenausgang 52 angeordnete Schieber geöffnet werden kann. Durch die Öffnung des im Schleusenausgang 52 angeordneten Schiebers gelangt das Einsatzgut in die Verteilrinne 54 und damit in das gerade der Verteilrinne 54 zugeordnete Reaktionsrohr 14. Nunmehr wird der innerhalb des Schleusenausgangs 52 angeordnete Schieber wieder geschlossen. Während des Schleusenvorgangs wird bei geöffnetem unteren Schieber und Auslauf des Einsatzgutes die Eintragschleuse 46 mit dem Reaktionsrohr 14 verbunden, während bei geöffnetem oberen Schieber während des Einfüllens des Einsatzgutes in die Eintragschleuse 46 das in der Eintragschleuse 46 vorhandene Gas in die Atmosphäre verdrängt wird. Damit bei diesem Verfahrensablauf kein Prozeßabgas aus dem Reaktionsrohr 14 an die Umgebung abgegeben werden kann, muß eine Spülung der Eintragschleuse 46 oder eine Absaugung erfolgen. Um dies zu erreichen, kann beispielsweise während des Auslaufens des Einsatzgutes in die Verteilrinne 54 tangential in die Eintragschleuse 46 Stickstoff eingeschleust werden. Hierdurch wird erreicht, daß während der Öffnung des Schleusenausgangs 52 kein Prozeßabgas, insbesondere Pyrolyseabgas oder Aktivierungsabgas, in die Eintragschleuse 46 und in den Bereich der Verteilrinne 54 gelangen können. Weiterhin ist denkbar, daß während des Öffnens des Schleuseneingangs 48 über ein Gebläse das aus der Eintragschleuse 46 verdrängte Gas der Brennkammer 32 zugeführt wird, so daß sichergestellt ist, daß kein während des Öffnens des Schleusenausgangs 52 in die Eintragschleuse 46 gelangtes Prozeßabgas in die Atmosphäre gelangen kann.

Die Verteilung des diskontinuierlich in die einzelnen Reaktionsrohre 14 eingebrachten Holzes erfolgt über die schwenkbare Verteilrinne 54, die das Holz aufnimmt und dem Übergangsrohr 42 zuführt, dessen Füllstandsanzeige die Nachspeisung anfordert. Die Verteilung 44, innerhalb der die Verteilrinne 54 angeordnet ist, ist beispielsweise in die Abgasführung der aus der Reaktorbeheizung kommenden Verbrennungsgase einbezogen, so daß hier eine Unterkühlung und damit eine Kondensatabscheidung vermieden wird.

Die schwenkbare Verteilrinne 54 reagiert auf ein Signal der bereits erwähnten Füllstandsanzeigen. Damit ist nicht vorausgesetzt, daß eine Befüllung der Reaktionsrohre 14 in der Reihenfolge ihrer Anordnung erfolgen muß. Über eine optische Anzeige, die beispielsweise in einer Meßwarte angeordnet sein kann, ist eine Kontrolle der Arbeit der Verteilrinne 54 möglich, so daß kontrolliert werden kann, ob eventuell ein Reaktionsrohr 14 über längere Zeit nicht befüllt wurde.

Die Ubergangsrohre 42 bilden eine derartige Verbindung zwischen den Reaktionsrohren 14 und dem Verteiler 44, daß ein Abzug der Prozeßabgase in den Gassammelraum 41 innerhalb des Bereiches 24 möglich ist, ohne daß die Prozeßabgase in den Verteiler 44 gelangen können.

Der Durchmesser der Ubergangsrohre 42 ist beispielsweise so bemessen, daß sich zwischen den Reaktionsrohren 14 und den Ubergangsrohren 42 ein Spalt ergibt, durch den die Prozeßabgase in den Gassammelraum 41 entweichen können.

Die Reaktionsrohre 14 werden innerhalb des Bereiches 22 durch über die Brennkammer 32 bereitgestellte Wärmeenergie von außen erhitzt.

Die Brennkammer 32 wird zu Prozeßbeginn durch eine Fremdenergiequelle, beispielsweise Öl, über den Brenner 68 gestartet, so daß Heizgas in den Bereich 22 des Schachtofens 12 gelangt. Das Heizgas erwärmt dort die Reaktionsrohre 14 und damit indirekt das in den Reaktionsrohren 14 sich befindende kohlenstoffhaltige Ausgangsmaterial. In der Führung des Heizgases sind die Wärmetauscher 64 und 65 angeordnet, deren Bedeutung noch erläutert wird.

Nach Anlauf der Anlage 10 wird das Prozeßabgas über die Auslaßöffnung 40 der Brennkammer 32 zugeführt. Die Brennkammer 32 ist dabei unmittelbar nach dem Schachtofen 12 angeordnet, so daß die Prozeßabgase nicht so weit abkühlen können, daß die darin enthaltenen Teere und Öle kondensieren können. Das heißt also, diese Prozeßabgase und die darin enthaltenen Bestandteile werden sofort nach Austritt aus dem Schachtofen 12 in der Brennkammer 32 verbrannt und übernehmen nach einer Anlaufzeit die Lieferung der Heizgase, die über dem Innenraum des Schachtofens 12 zugeleitet werden. Somit ist gewährleistet, da die Prozeßabgase einen hohen energetischen Wert besitzen, daß nach einer kurzen Anlaufzeit die gesamte Anlage 10 in einem energetisch autarken Betrieb arbeitet. Der Brennkammer 32 wird dabei in Stufen Luft zugeführt, so daß in der Brennkammer 32 die Luftzufuhr so gesteuert wird, daß eine thermische Stickoxidbildung und auch ein Kohlenmonoxidaustritt, auf ein Minimum reduziert werden. Die Brennkammer 32 ist durch die Luftzugabe beliebig temperierbar.

Der gesamte aus der Verkohlung des kohlenstoffhaltigen Ausgangsmaterials entstehende Wasserdampf, der durch die Holzfeuchte und das damit verbundene Zersetzungswasser entsteht, wird mit durch die Brennkammer 32 geführt und dort von den Belastungen durch organische Säuren befreit und mit den Abgasen der Brennkammer 32 in die Atmosphäre abgegeben. Eine übliche Abwasserreinigung für säuren-, teer- und ölhaltige Prozeßabwässer ist damit nicht mehr erforderlich.

Ist die Trocknung des kohlenstoffhaltigen Ausgangsmaterials in der obersten Zone der Reaktionsrohre 14 weitgehend abgeschlossen, führt die Exothermie der Pyrolyse zu einer relativ schnellen Verkohlung, die bei einem Gehalt von flüchtigen Bestandteilen von ca. 15 % aus Gründen der gewünschten Holzkohlequalität abzubrechen ist. Es hat sich gezeigt, daß eine Gesamtaufheizzeit von ca. 2,5 Stunden genügt, um aus Holzstücken der als Einsatzmaterial vorgesehenen Größe Holzkohle der erwarteten Qualität zu erzeugen.

Durch die indirekte Aufheizung des kohlenstoffhaltigen Materials kann die Temperatur außerhalb der Reaktionsrohre 14 größer sein als die, die zur eigentlichen Pyrolyse bzw. Aktivierung benötigt wird. Sie darf aber nicht so hoch sein, daß innerhalb der eingefüllten Holzstücke unvertretbare Differenzen im Durchkohlungsgrad, das heißt im Anteil an flüchtigen Bestandteilen, entstehen.

Diese Beaufschlagung der Reaktionsrohre 14 mit den Heizgasen führt zu einer indirekten Erwärmung der innerhalb der Reaktionsrohre 14 eingefüllten kohlenstoffhaltigen Ausgangsmaterialien. Zur Vermeidung einer Brückenbildung innerhalb der Reaktionsrohre 14 wird der lichte Durchmesser der Reaktionsrohre 14 beispielsweise in einem Verhältnis von 1 : 5 zwischen Stückgröße der eingefüllten Holzstücke und dem lichten Durchmesser gewählt. Zur Vermeidung von Brückenbildungen können die Reaktionsrohre 14 auch eine konische Erweiterung aufweisen, die im Bereich der thermischen Prozesse, also in den Bereichen 22 und 24, beispielsweise ca. 5° betragen kann. Im Falle einer Brückenbildung innerhalb der Reaktionsrohre 14 erkennt die Verteilerrinne 54, daß ein Reaktionsrohr 14 nicht regelmäßig gefüllt wird und signalisiert diese Brückenbildung weiter. Durch Zuführung von Reaktionsdampf über die Einlaßöffnung 30 wird die Brückenbildung beseitigt und dieses Reaktionsrohr 14 normal weiter befüllt.

Das in die Reaktionsrohre 14 dosierte Holz wird durch die hohe Außentemperatur im Bereich 22 des Schachtofens 12 einer intensiven thermischen Beanspruchung unterzogen. Die Trocknung des Holzes erfordert wesentlich mehr Wärme, als sie zur Verdampfung des Wassers erforderlich wäre. Durch hygroskopische Sprengarbeit wird mit abnehmendem Wassergehalt der Energieaufwand beim Trocknen ständig höher und erreicht ca. 150 % der Verdampfungswärme für das Wasser. Die für die Trocknung erforderlichen Zeiten sind daher nicht genau bestimmbar, man erreicht jedoch bei einer Steigerung der Temperatur des Schachtofens auf über 350 °C und einer stetig weitersteigenden Pyrolysetemperatur, daß die Holzkohle einen Rest flüchtigen Gehalt von 15 bis 18 % aufweist. Die Exothermie der Holzpyrolyse unterstützt dabei die Durchkohlung der Holzstücke wesentlich. Hierdurch wird es möglich, daß die Reaktionsrohre 14 so beheizt werden, daß während der Holzverkohlung im Bereich 22 die Temperatur außerhalb der Reaktionsrohre 14 bei ca. 750 °C liegt, während die Temperatur im Bereich 24 oberhalb von 300 °C liegen kann. Eine Abstimmung der Temperaturführung mit der Anlagenleistung und der gewünschten Holzkohlequalität ist dabei entsprechend der Prozeßführung einstellbar.

Die erwähnte Temperaturführung innerhalb des Schachtofens 12 im Bereich 22 ist insbesondere für den gesamten Anlagenbetrieb günstig, da die Brennkammer 32 somit stets oberhalb einer sicheren Zündtemperatur, die bei ca. 750 °C liegt, betrieben werden kann.

Während der thermischen Behandlung der eingesetzten Holzstücke folgt nach der Trocknung die thermische Zersetzung, bei der beispielsweise folgende Produkte entstehen:
- Zersetzungswasser 32 %
- kondensierbare Bestandteile (Teer, Methanol, Essigsäure) 25 %
- gasförmige Bestandteile 16,5 %
- Holzkohle 26,5 %.

Die gasförmigen und kondensierbaren Produkte steigen als Prozeßabgase auf und gestatten es, in der Brennkammer 32 durch überstöchiometrische Verbrennung ausreichend Wärme zu erzeugen, so daß die Schachtöfen 12 mit dem Prozeßabgas beheizt werden können und noch ein erheblicher Energieüberschuß verbleibt. Die Reaktionsrohre 14 erweitern sich im Bereich der Einlaßöffnung 30 zu einem Ringraum, in dem die Einspeisung von Aktivierungsdampf (Heißdampf) erfolgt. Der Aktivierungsdampf wird beispielsweise über den Wärmetauscher 64 aus überschüssigem, nicht für die Beheizung des Bereiches 22 benötigtem Heizgas gewonnen. Die Einführung des Aktivierungsdampfes über die Einlaßöffnung 30 bewirkt in dem dortigen Bereich des Reaktionsrohres 14 eine endotherme Reaktion, das heißt, die für die Überhitzung des Aktivierungsdampfes benötigte Wärme wird der Holzkohle entzogen und diese damit gekühlt. Durch die Zuführung von Aktivierungsdampf wird einerseits durch die Wirkung als Spülgas eine verbesserte Wärmeübertragung innerhalb der Reaktionsrohre 14, insbesondere innerhalb der Bereiche 22 und 24, erreicht und damit eine Erhöhung der Holzkohleausbeute möglich. Der Heißdampf steigt innerhalb der Reaktionsrohre 14 im Gegenstrom zu dem sich darin befindenden kohlenstoffhaltigem Material auf und dient als Prozeßgas. Während der Verkohlung, also während der Pyrolyse und während der Aktivierung, wird in der mittleren und unteren Zone der Reaktionsrohre 14 Pyrolysegas beziehungsweise Prozeßgas frei, das sich mit dem über den Einlaß 30 eingelassenen, nicht bei der Aktivierung umgesetzten Heißdampf vermischt und nach oben aus den Reaktionsrohren 14 als Prozeßabgas in den Gassammelraum 41 entweicht.

In dem Bereich 20 des Schachtofens 12 findet eine Kühlung statt, die insbesondere dadurch verbessert wird, daß in diesem Bereich die Reaktionsrohre 14 doppelwandig ausgeführt sind und in den sich dadurch ergebenden Raum Kühlwasser eingeleitet werden kann. Zur Verbesserung der Kühlwirkung können die Reaktionsrohre 14 zusätzlich Kühlrippen aufweisen.

Soll mit der Anlage 10 anstelle der bisher beschriebenen Holzkohleherstellung Aktivkohle hergestellt werden, werden entsprechende Hackschnitzel über die Eintragschleuse 46 in die Reaktionsrohre 14 eingebracht. Die dabei zu beachtenden Vorgänge sind bereits weiter oben ausführlich erläutert und sollen hier nicht wiederholt werden. Durch eine dichtere Lagerung der Hackschnitzel verbessern sich die Wärmeübergangsbedingungen innerhalb der Reaktionsrohre 14. Eine Trocknung und eine Pyrolyse der Hackschnitzel werden daher bereits vor Erreichen der Einlaßöffnung 30, also der erwähnten Erweiterung der Reaktionsrohre 14, erreicht. Somit ist zu diesem zeitigen Zeitpunkt bereits Holzkohle entstanden, die nunmehr teilvergast wird. Hierbei reagiert ein Teil des Kohlenstoffs der Holzkohle mit gebundenem Sauerstoff und führt zu einer Porenbildung, die die spezifische Oberfläche der Holzkohle so erweitern, daß sie als Adsorptionsmittel verwendet werden kann.

Während bei der üblichen Aktivkohleerzeugung aus Holzkohle der Aktivierungsprozeß nach Abkühlung der Holzkohle in einem separaten Reaktor durchgeführt wurde, wird hier durch die Kopplung der Prozesse Trocknung, Pyrolyse und Aktivierung auf die Energieverluste durch Abkühlung und Wiedererwärmung für die Teilvergasung verzichtet. Der Prozeß arbeitet also im Bereich zwischen der Holzpyrolyse und der totalen Holzvergasung.

Innerhalb der Reaktionsrohre 14 laufen dabei folgende Vorgänge ab. Der Bereich 22, in dem die thermische Behandlung des Einsatzmaterials durchgeführt wird, wird vom Heizgas der Brennkammer 32 nach Temperierung auf die gewünschte Reaktortemperatur beheizt. Zur definierten Temperierung dient beispielsweise der Wärmetauscher 65. Zur gleichmäßigen Verteilung der Heizgase kann im Zentrum des Schachtofens 12, das heißt innerhalb der durch die Reaktionsrohre 14 gebildeten Kreisform, ein Verdränger angeordnet sein, so daß der Kern des Schachtofens 12 nicht vom Heizgas durchströmt wird. Zur Verbesserung der Heizgasverteilung und des Wärmeübergangs vom Heizgas auf die Reaktionsrohre 14 kann der Zwischenraum innerhalb der Reaktionsrohre 14 mit Schichten von Füllkörpern ausgefüllt. Diese Schichten werden auf eine Lochplatte aufgebaut, unter der die heißen Heizgase über den Querschnitt des Schachtofens 12 verteilt werden. Die mit der Auffüllung erreichte Trägheit in der Wärmeübertragung bewirkt eine Konstanthaltung der Temperaturverteilung innerhalb des Bereiches 22. Vor allem ergeben sich Vorteile für die Prozeßführung, da die Füllkörperschüttung einen Druckverlust in den Heizgasweg einbringt, der es gestattet, den Druck im oberen Bereich des Schachtofens 12 leichter konstant zu halten. Oberhalb des Bereiches 22 werden die Heizgase durch die Auslaßöffnung 34 dem Wärmetauscher 36 zugeführt. In den Bereich 22 können weiterhin, bisher nicht erwähnte, im unteren Teil, das heißt unterhalb der Verkokungszone und damit unterhalb der erwähnten Lochbleche für die Heizgasverteilung zum Anheizen Brenner 66 angeordnet sein. Diese Brenner 66 dienen lediglich zum Anfahren der Anlage und werden automatisch abgeschaltet, wenn die Reaktionstemperatur erreicht ist und die Brennkammer 32 auf Verbrennung von Prozeßabgasen aus dem Schachtofen 12 umgeschaltet ist.

Der Bereich 24, das heißt die Trockenzone, wird nunmehr von dem Heizgas durchströmt, das über die Auslaßöffnung 34 dem Wärmetauscher 36 zugeführt wurde. Damit ist eine Temperierung des Bereiches 24 auf ca. 350 °C möglich, und die Trocknung kann der Feuchte des gelieferten Ausgangsmaterials angepaßt werden. Das Heizgas durchströmt nach der Trockenzone auch den Gassammelraum für das Prozeßabgas bzw. Aktivierungsabgas und verhindert dadurch eine Kondensation von Teeren und Ölen, die innerhalb der Prozeßabgase vorhanden sind, vor Erreichen der Brennkammer 32.

In dem Bereich 20 wird das erzeugte Reaktionsprodukt, wie bereits weiter oben erwähnt, beispielsweise durch Wasser gekühlt. Der Bereich 20 ist dabei von den Bereichen 22 und 24 gasdicht getrennt.

Die unterhalb der Reaktionsrohre 14 angeordneten Austragsschnecken 60 nehmen das aus jedem zugeordneten Reaktionsrohr 14 anfallende Produkt auf. Hiermit ist erreicht, daß für jedes Reaktionsrohr 14 der Durchsatz separat geregelt werden kann. Sollte eine Brückenbildung in einem Reaktionsrohr 14 registriert werden, wird die zugehörige Austragsschnecke 60 so lange angehalten, bis die Brückenbildung durch Vergasen eines Teils der Holzkohle beseitigt und eine Nachfüllung des betreffenden Reaktionsrohres 14 mit Frischholz erfolgt ist. Damit wird erreicht, daß bei einer größeren Nachfüllmenge, als der normalen Dosierung entspricht, die Austragsschnecke 60 erst zugeschaltet wird, wenn das Holz im Reaktionsrohr 14 durchgekohlt ist. Der Austrag von Holz wegen unzureichender Verweilzeit im Reaktionsrohr 14 wird auf diese Weise verhindert. Eine Brückenbildung im Reaktionsrohr 14 kann durch einen Temperaturabfall im Schüttkegel der Austragsschnecken 60 erkannt werden, da keine Holzkohle mehr in die Austragsschnecke 60 gelangt. Die Vergasung zur Beseitigung der Brückenbildung erfolgt durch verstärkte Zugabe von Prozeßdampf über die Einlaßöffnung 30. Die Austragsschnecken 60 fördern das Produkt beispielsweise in die angeordneten Sammelschnecken 62, die es einer weiteren Verarbeitung und/oder Konfektionierung zuführen. Alle Schnecken 60 bzw. 62 sind langsam laufende Druckschnecken, die das Produkt nur wenig mechanisch beanspruchen und die vorzugsweise mit einer Wasserdosierung versehen sind. Diese Wasserzugabe bewirkt eine endgültige Abkühlung des Produktes und stellt den erwünschten Wassergehalt von 2 % ein. Eine Erhöhung des Feuchtegehaltes, beispielsweise auf einen Wert von 8 %, erfolgt bei der späteren Konfektionierung.

Aus dem innerhalb des Bereiches 24 angeordneten Gassammelraum 41 des Schachtofens 12 wird das Prozeßabgas über die Auslaßöffnung 40 in die Brennkammer 32 überführt. Da je Tonne Holz (wasserfrei) ca. 110 m³ Pyrolysegas mit einem Gehalt von ca. 1,3 kg Teer und weiteren 1,0 kg kondensierbaren Anteilen in die Brennkammer 32 überführt werden, ist es für die Prozeßführung von wesentlicher Bedeutung, daß keine Möglichkeit der Abscheidung von Kondensaten durch einen Temperaturabfall besteht. Für diesen Prozeß ist es typisch und wesentlich, daß die Pyrolysegase auf dem Weg bis zur Verbrennung nicht unter 250 °C abgekühlt werden. Bleiben die kondensierbaren Stoffe bis zur Verbrennung gasförmig, kann mit einem guten Ausbrand und geringen Emissionen gerechnet werden. Der Übergang der Pyrolysegase zwischen dem Schachtofen 12 und der Brennkammer 32 wird daher, wie bereits erwähnt, durch die Heizgase, die dem Bereich 24 zur Trocknung zugeführt werden, beheizt. Durch die Verbrennung innerhalb der Brennkammer 32 werden Heizgase erreicht, die Temperaturen von 1100 °C bis 1200 °C betragen. Die Verbrennung wird dabei mit einem Luftüberschuß betrieben. Indem diese sehr heißen Heizgase über die Wärmetauscher 64 und 65 geführt werden, kann die benötigte Temperatur innerhalb des Bereiches 22 des Schachtofens 12 eingestellt werden. Die dem Heizgas entzogene Wärmeenergie wird dabei gleichzeitig zur Überhitzung des Aktivierungsdampfes, der über die Einlaßöffnung 30 zuführbar ist, verwendet.

Zur Reduzierung einer auf Grund der hohen Temperatur zu erwartenden Stickoxidbildung wird die Brennkammer 32 vorzugsweise zweistufig ausgelegt, wobei die erste Stufe nach intensiver Vermischung des Prozeßabgases mit der Verbrennungsluft mit einer Luftüberschußzahl betrieben wird, während in der zweiten Stufe durch Sekundärluftzufuhr die endgültige Luftüberschußzahl eingestellt wird. Hiermit wird erreicht, daß eine Minimierung der Emissionsbelastungen realisiert werden kann. Zur Vermeidung des Austritts von Emissionen, beispielsweise im Störfall, kann die Brennkammer 32 einen Sicherheitsschornstein besitzen, der es gestattet, die brennbaren Bestandteile des Prozeßabgases durch eine automatisch zu schaltende Stützflamme zu verbrennen. Während der Anfahrphase der Anlage 10 wird die Brennkammer vorerst über den Brenner 68 mit einem zusätzlichen Brennstoff, beispielsweise Heizöl, erwärmt, bis die Umstellung auf die Verbrennung der Prozeßabgase erfolgen kann.

Die Optimierung der Temperaturführung im Schachtofen 12 ermöglicht eine Optimierung des Energiehaushaltes des gesamten Prozesses der Behandlung von kohlenstoffhaltigem Ausgangsmaterial. Bei der Aktivierung der in den Reaktionsrohren 14 des Schachtofens 12 erzeugten Holzkohle wird Energie im stark endothermen Prozeß verbraucht. Im Innern der Reaktionsrohre 14 wird durch die indirekte Wärmeübertragung eine geringere Reaktionstemperatur erreicht als in der Nähe der Reaktorwand. Hier sind Temperaturführung, Versorgung mit Aktivierungsgas, Reaktorleistung und Produktqualität besonders gut optimierbar.

Nach allem wird festgestellt, daß die bei der trockenen Destillation des kohlenstoffhaltigen Ausgangsmaterials, also der Pyrolyse bzw. der Verkohlung entstehenden Prozeßabgase und kondensierbaren Stoffe, beispielsweise organische Säuren, Teere und Öle, durch die Verfahrensgestaltung ausschließlich energetisch genutzt werden und damit kontrolliert und gezielt umweltfreundlich beseitigt werden.

Durch die Nachschaltung der Brennkammer 32 unmittelbar nach dem Schachtofen 12 wird erreicht, daß hohe Temperaturen und Verweilzeiten bei ausreichendem Sauerstoffangebot einen sehr hohen Ausbrenngrad der kondensierbaren Pyrolyseprodukte gewährleisten, während zur Minimierung der Stickoxidemissionen gestuft Luft zugeführt werden kann.

Im nachfolgenden soll der Verfahrensablauf an einem konkreten Ausführungsbeispiel nochmals verdeutlicht werden.

Für die Holzkohleerzeugung mit der Anlage 10 werden an der Luft abgelagertes Buchen- und Eichenschichtholz, in Abmessungen von ca. 10 x 10 x 10 cm in wenigstens eines der Reaktionsrohre 14 eingefüllt. Für eine Aktivkohleerzeugung werden Hackschnitzel der gleichen Holzarten in den Abmessungen von ca. 50 x 20 x 8 mm eingefüllt. Vor der Verkohlung bzw. Aktivierung werden ca. 85 % der Rinde entfernt, da sich ein höherer Rindenanteil negativ auf die Qualität der zu erzeugenden Produkte auswirken kann. Das erwähnte Einsatzmaterial besitzt daher folgende typische Ausgangswerte:
- Wassergehalt ca. 25 % (bezogen auf Masse feucht)
- Aschegehalt ca. 1,5 % (wasserfrei)
- Schwefelgehalt max. 0,05 % (wasserfrei)
- Stickstoffgehalt ca. 0,1 % (wasserfrei)
- flüchtige Bestandteile 80 bis 82 % (wasserfrei).

Die mit der Anlage 10 und dem beschriebenen Verfahren hergestellte stückige Holzkohle hat nach dem Austrag aus dem Reaktionsrohr 14 folgende Analysewerte:
- Wassergehalt max. 10 %
- Aschegehalt (wasserfrei) max. 4 %
- fixer Kohlenstoff (wasserfrei) min. 80 %
- Stückgröße 10 bis 100 mm.

Wird in den Reaktionsrohren in einem Verfahrensschritt aus feuchten gehackten Holzschnitzeln Aktivkohle erzeugt, besitzt diese folgende Analysewerte:
- Körnung 0,5 bis 4 mm
- Wassergehalt max. 15 %
- Aschegehalt (wasserfrei) max. 6 %
- Rütteldichte 240 bis 410 kg/m³
- Adsorptionsleistungen gegenüber Phenol 2 bis 4 % (bei 1 ppm), 0,8 bis 2 % (bei 0,1 ppm)
- gegenüber Jod min. 650 mg/g
- spezifische Oberfläche min. 750 m²/g
- die Porenstruktur ist bimodal

Die angegebenen Werte für die Holzkohle- bzw. Aktivkohleerzeugung sind lediglich beispielhaft und sind nicht geeignet, das beschriebene Verfahren auf diese Werte einzuschränken.

Durch Einstellung der Prozeßparameter, also insbesondere der Temperaturführung, kann der Reaktor so gefahren werden, daß wahlweise oder anteilig die eingesetzten Ausgangsmengen an kohlenstoffhaltigem Material in die gewünschten Zielprodukte umgesetzt werden können, so daß durch eine Änderung der Prozeßführung Holzkohle oder Aktivat hergestellt werden kann.

Wird die Anlage 10 so betrieben, daß Holzkohle hergestellt werden soll, kann über die Einlaßöffnung 30 ebenfalls eine Zuführung von Heißdampf (Wasserdampf) in die Reaktionsrohre 14 erfolgen, die eigentlich nur als Aktivierungsgaszufuhr bei der Aktivkohleherstellung notwendig ist. Dieser Wasserdampf wirkt bei einer erforderlichen Temperatur von ca. 500 °C für die geforderte Ausgarung des Holzes nicht als Aktivierungsgas im Sinne der Aktivierung. Es wurde jedoch gefunden, daß der Wasserdampf bei der Holzkohleherstellung durch die damit verbundene Erhöhung der Spülgasmenge zu einer Verbesserung des Wärmehaushaltes in den Reaktionsrohren 14 führt und damit eine Erhöhung der Holzkohleausbeute erreicht werden kann.

Im gezeigten Beispiel besitzt die Anlage 10 zwei Schachtöfen 12. Durch entsprechende Verfahrensgestaltung kann beispielsweise in dem einen Schachtofen 12 Holzkohle und in dem anderen Schachtofen 12 Aktivkohle gewonnen werden. Es ergibt sich somit eine universell einsetzbare Anlage, die auf die zur Verfügung stehenden Ausgangsmaterialien abgestimmt autark arbeiten kann.

## Patentansprüche

1. Anlage zum kontinuierlichen thermischen Behandeln von kohlenstoffhaltigem Material mit wenigstens einem, wenigstens zwei im wesentlichen vertikal angeordnete Reaktoren aufweisenden Schachtofen, einer gemeinsamen Einfülleinrichtung für das kohlenstoffhaltige Material, einer Auslaßeinrichtung für das behandelte kohlenstoffhaltige Material, einer jedem Reaktor zugeordneten Einlaßöffnung für Prozeßgase und einer jedem Reaktor zugeordneten Auslaßöffnung für Prozeßabgase und einer Einrichtung zum indirekten Beheizen der Reaktoren, **dadurch gekennzeichnet**, daß die Reaktoren (Reaktionsrohre 14) autark zu betreibende Einheiten bilden, deren Auslaßöffnungen für Prozeßabgase in einem gemeinsamen Gassammelraum (41) münden, der Gassammelraum (41) mit einer Brennkammer (32) verbunden ist, die zum gemeinsamen Beheizen aller Reaktionsrohre (14) wenigstens eines Schachtofens (12) mit einem Bereich (22) des Schachtofens (12) verbunden ist, der der indirekten Beheizung der Reaktionsrohre (14) dient.

2. Anlage nach einem der vorhergehenden Ansprüche, **dadurch gekennzeichnet**, daß ein Schachtofen (12) zwei bis fünfzehn, vorzugsweise fünf bis zehn, insbesondere acht Reaktionsrohre (14) besitzt.

3. Anlage nach einem der vorhergehenden Ansprüche, **dadurch gekennzeichnet**, daß die Reaktionsrohre (14) zylindrisch oder mit einer konischen Erweiterung ausgebildet sind.

4. Anlage nach einem der vorhergehenden Ansprüche, **dadurch gekennzeichnet**, daß die Reaktionsrohre (14) innerhalb des Schachtofens (12) beabstandet zueinander angeordnet sind.

5. Anlage nach einem der vorhergehenden Ansprüche, **dadurch gekennzeichnet**, daß der Schachtofen (12) axial getrennte Bereiche (20, 22, 24) aufweist, die die Reaktionsrohre (14) übergreifen.

6. Anlage nach einem der vorhergehenden Ansprüche, **dadurch gekennzeichnet**, daß die Bereiche (20, 22, 24) durch Zwischenböden (16, 18) gebildet sind, die zur Aufnahme der Reaktionsrohre (14) Durchgangsöffnungen (26) aufweisen.

7. Anlage nach einem der vorhergehenden Ansprüche, **dadurch gekennzeichnet**, daß die Reaktionsrohre (14) innerhalb des Bereiches (20) doppelwandig ausgebildet sind.

8. Anlage nach einem der vorhergehenden Ansprüche, **dadurch gekennzeichnet**, daß der Bereich (22) eine mit der Brennkammer (32) in Verbindung stehende Eintrittsöffnung (33) für Heizgase und eine mit einem Wärmetauscher (36) in Verbindung stehende Auslaßöffnung (34) aufweist.

9. Anlage nach Anspruch 7, **dadurch gekennzeichnet**, daß die Eintrittsöffnung (33) über wenigstens einen Wärmetauscher (64, 65) mit der Brennkammer (32) in Verbindung steht.

10. Anlage nach einem der vorhergehenden Ansprüche, **dadurch gekennzeichnet**, daß innerhalb des Bereiches (22) wenigsten ein Brenner (66) angeordnet ist.

11. Anlage nach einem der vorhergehenden Ansprüche, **dadurch gekennzeichnet**, daß der Bereich (24) eine mit dem Wärmetauscher (36) in Verbindung stehende Einlaßöffnung und eine zu der Brennkammer (32) führende Auslaßöffnung (40) aufweist.

12. Anlage nach einem der vorhergehenden Ansprüche, **dadurch gekennzeichnet**, daß innerhalb des Bereiches (24) der Gassammelraum (41) zur Aufnahme der die Reaktionsrohre (14) verlassenden Prozeßabgase angeordnet ist.

13. Anlage nach einem der vorhergehenden Ansprüche, **dadurch gekennzeichnet**, daß die Reaktionsrohre (14) innerhalb des Bereiches (22) die Einlaßöffnung (30) für Prozeßgase aufweisen.

14. Anlage nach Anspruch 13, **dadurch gekennzeichnet**, daß die Einlaßöffnung (30) über einen Wärmetauscher (64) mit der Brennkammer (32) in Verbindung steht.

15. Verfahren zum kontinuierlichen thermischen Behandeln von kohlenstoffhaltigem Material in einem, wenigstens zwei indirekt beheizbare Reaktoren aufweisenden Schachtofen, wobei dem kohlenstoffhaltigen Material zur Behandlung Prozeßgase zugeführt werden, **dadurch gekennzeichnet**, daß die Reaktoren (Reaktionsrohre 14) getrennt mit dem kohlenstoffhaltigen Material beschickt werden und daß während der Behandlung des kohlenstoffhaltigen Materials anfallendes gas- und dampfförmiges Prozeßabgas aller Reaktionsrohre gesammelt und sofort energetisch zur Beheizung der Reaktionsrohre und zur Bereitstellung der Prozeßgase verwertet wird.

16. Verfahren nach Anspruch 15, **dadurch gekennzeichnet**, daß in den Reaktionsrohren (14) eine Pyrolyse oder eine Aktivierung des kohlenstoffhaltigen Materials durchgeführt wird.

17. Verfahren nach einem der vorhergehenden Ansprüche, **dadurch gekennzeichnet**, daß die Wärmeenergie durch Verbrennen von Prozeßabgasen und/oder in den Prozeßabgasen enthaltenen Bestandteilen in einer Brennkammer gewonnen wird.

18. Verfahren nach einem der vorhergehenden Ansprüche, **dadurch gekennzeichnet**, daß die Prozeßabgase sofort nach Verlassen des Schachtofens luftüberschüssig verbrannt werden.

19. Verfahren nach einem der vorhergehenden Ansprüche, **dadurch gekennzeichnet**, daß der Brennkammer während des Verbrennens der Prozeßabgase und/oder der in den Prozeßabgasen enthaltenen Bestandteile die Luft gestuft zugeführt wird.

20. Verfahren nach einem der vorhergehenden Ansprüche, **dadurch gekennzeichnet**, daß die durch die Verbrennung in der Brennkammer erzeugten Heizgase innerhalb des Schachtofens auf die Reaktionsrohre geführt werden.

21. Verfahren nach einem der vorhergehenden Ansprüche, **dadurch gekennzeichnet**, daß die Heizgase derart in den Schachtofen geführt werden, daß eine indirekte Beheizung der Reaktionsrohre durchgeführt wird und vorzugsweise verschiedene Temperaturbereiche des Schachtofens erreicht werden, so daß gleichzeitig eine Trocknung und/oder eine Pyrolyse und/oder eine Erzeugung von Aktivkohle in wenigstens einem Reaktionsrohr erfolgt.

22. Verfahren nach einem der vorhergehenden Ansprüche, **dadurch gekennzeichnet**, daß überschüssige Heizgase zur Erzeugung von Prozeßgasen, insbesondere Aktivierungsdampf, verwendet werden.

23. Verfahren nach einem der vorhergehenden Ansprüche, **dadurch gekennzeichnet**, daß die Prozeßgase das kohlenstoffhaltige Material im Gegenstrom durchströmen.

24. Verfahren nach einem der vorhergehenden Ansprüche, **dadurch gekennzeichnet**, daß der Schachtofen bzw. die Reaktionsrohre kontinuierlich mit kohlenstoffhaltigem Material beschickt werden.

## Claims

1. A plant for the continuous thermal treatment of carbon-containing material, having at least one shaft furnace comprising at least two reactors arranged substantially vertically, a common filling device for the carbon-containing material, an outlet device for the treated carbon-containing material, an inlet opening associated with each reactor for process gases and an outlet opening associated with each reactor for waste process gases and a device for indirectly heating the reactors, **characterized in that** the reactors (reaction tubes 14) form units which are to be driven self-sufficiently and of which the outlet openings for waste process gases open into a common gas-collecting chamber (41), the gas-collecting chamber (41) is connected to a combustion chamber (32) which, for the purpose of jointly heating all the reaction tubes (14) of at least one shaft furnace (12), is connected to an area (22) of the shaft furnace (12) which is used for indirectly heating the reaction tubes (14).

2. A plant according to one of the preceding Claims [sic], **characterized in that** one shaft furnace (12) comprises from two to fifteen, preferably five to ten, and in particular eight reaction tubes (14).

3. A plant according to one of the preceding Claims, **characterized in that** the reaction tubes (14) are made cylindrical or with a conical enlargement.

4. A plant according to one of the preceding Claims, **characterized in that** the reaction tubes (14) are arranged at a distance from one another inside the shaft furnace (12).

5. A plant according to one of the preceding Claims, **characterized in that** the shaft furnace (12) comprises axially separate areas (20, 22, 24) which overlap the reaction tubes (14).

6. A plant according to one of the preceding Claims, **characterized in that** the areas (20, 22, 24) are formed by intermediate floors (16, 18) which have through openings (26) for receiving the reaction tubes (14).

7. A plant according to one of the preceding Claims, **characterized in that** the reaction tubes (14) are constructed with double walls inside the area (20).

8. A plant according to one of the preceding Claims, **characterized in that** the area (22) has an entry opening (33) for hot gases connected to the combustion chamber (32) and an outlet opening (34) connected to a heat exchanger (36).

9. A plant according to Claim 7, **characterized in that** the entry opening (33) is connected to the combustion chamber (32) by way of at least one heat exchanger (64, 65).

10. A plant according to one of the preceding Claims, **characterized in that** at least one burner (66) is arranged inside the area (22).

11. A plant according to one of the preceding Claims, **characterized in that** the area (24) has an inlet opening connected to the heat exchanger (36) and an outlet opening (40) leading to the combustion chamber (32).

12. A plant according to one of the preceding Claims, **characterized in that** the gas-collecting chamber (41) for receiving the waste process gases leaving the reaction tubes (14) is arranged inside the area (24).

13. A plant according to one of the preceding Claims, **characterized in that** the reaction tubes (14) inside the area (22) have the inlet opening (30) for process gases.

14. A plant according to Claim 13, **characterized in that** the inlet opening (30) is connected to the combustion chamber (32) by way of a heat exchanger (64).

15. A process for the continuous thermal treatment of carbon-containing material in a shaft furnace comprising at least two reactors which can be heated indirectly, wherein process gases are fed to the carbon-containing material for treatment, **characterized in that** the reactors (reaction tubes 14) are charged separately with the carbon-containing material, and gaseous and vaporous waste process gas - produced during the treatment of the carbon-containing material - from all the reaction tubes is collected and is immediately utilized as energy for heating the reaction tubes and for preparing the process gases.

16. A process according to Claim 15, **characterized in that** pyrolysis or activation of the carbon-containing material is carried out in the reaction tubes (14).

17. A process according to one of the preceding Claims, **characterized in that** the thermal energy is obtained in a combustion chamber by burning waste process gases and/or constituents contained in the waste process gases.

18. A process according to one of the preceding Claims, **characterized in that** the waste process gases are burnt with an excess of air immediately after leaving the shaft furnace.

19. A process according to one of the preceding Claims, **characterized in that** the air is fed in stages to the combustion chamber during the burning of the waste process gases and/or the constituents contained in the waste process gases.

20. A process according to one of the preceding Claims, **characterized in that** the hot gases produced by the burning in the combustion chamber are fed inside the shaft furnace to the reaction tubes.

21. A process according to one of the preceding Claims, **characterized in that** the hot gases are fed into the shaft furnace in such a way that indirect heating of the reaction tubes takes place and different temperature ranges of the shaft furnace are preferably achieved, so that drying and/or pyrolysis and/or production of activated carbon takes place simultaneously in at least one reaction tube.

22. A process according to one of the preceding Claims, **characterized in that** excess hot gases are used for producing process gases, in particular activation vapour.

23. A process according to one of the preceding Claims, **characterized in that** the process gases flow through the carbon-containing material in counterflow.

24. A process according to one of the preceding Claims, **characterized in that** the shaft furnace and the reaction tubes are continuously charged with carbon-containing material.

## Revendications

1. Installation pour le traitement thermique continu d'un matériau contenant du carbone, comprenant au moins un four vertical qui comporte au moins deux réacteurs disposés verticalement pour l'essentiel, un dispositif de remplissage commun destiné au matériau contenant du carbone, un dispositif de sortie destiné au matériau contenant du carbone qui a été traité, une ouverture d'entrée qui est associée à chaque réacteur et qui est destinée aux gaz du procédé, et une ouverture de sortie qui est associée à chaque réacteur et qui est destinée aux gaz brûlés du procédé, ainsi qu'un dispositif pour chauffer indirectement les réacteurs, caractérisée par le fait que les réacteurs (réacteurs tubulaires 14) constituent des ensembles à fonctionnement autonome dont les ouvertures de sortie destinées aux gaz brûlés du procédé débouchent dans une chambre collectrice commune (41) destinée aux gaz, et que la chambre collectrice (41) destinée aux gaz, en vue du chauffage commun de tous les réacteurs tubulaires (14) d'au moins un four vertical (12), est raccordée à une chambre de combustion (32) reliée à une zone (22) du four vertical (12) qui sert au chauffage indirect des réacteurs tubulaires (14).

2. Installation selon la revendication précédente, caractérisée par le fait qu'un four vertical (12) comporte de deux à quinze réacteurs tubulaires (14), de préférence de cinq à dix, et en particulier huit.

3. Installation selon l'une des revendications précédentes, caractérisée par le fait que les réacteurs tubulaires (14) sont cylindriques ou présentent un élargissement conique.

4. Installation selon l'une des revendications précédentes, caractérisée par le fait que les réacteurs tubulaires (14) sont disposés à distance les uns des autres à l'intérieur du four vertical (12).

5. Installation selon l'une des revendications précédentes, caractérisée par le fait que le four vertical (12) présente des zones (20, 22, 24) qui sont séparées dans le sens axial et qui recouvrent les réacteurs tubulaires (14).

6. Installation selon l'une des revendications précédentes, caractérisée par le fait que les zones (20, 22, 24) sont constituées par des planchers intermédiaires (16, 18) qui présentent des ouvertures de passage (26) pour recevoir les réacteurs tubulaires (14).

7. Installation selon l'une des revendications précédentes, caractérisée par le fait que les réacteurs tubulaires (14) sont réalisés en présentant une double paroi à l'intérieur de la zone (20).

8. Installation selon l'une des revendications précédentes, caractérisée par le fait que la zone (22) présente une ouverture d'entrée (33) qui est destinée aux gaz chauds et qui communique avec la chambre de combustion (32), ainsi qu'une ouverture de sortie (34) qui communique avec un échangeur de chaleur (36).

9. Installation selon la revendication 7, caractérisée par le fait que l'ouverture d'entrée (33) communique avec la chambre de combustion (32) par l'intermédiaire d'au moins un échangeur de chaleur (64, 65).

10. Installation selon l'une des revendications précédentes, caractérisée par le fait qu'au moins un brûleur (66) est disposé à l'intérieur de la zone (22).

11. Installation selon l'une des revendications précédentes, caractérisée par le fait que la zone (24) présente une ouverture d'entrée qui communique avec l'échangeur de chaleur (36) et une ouverture de sortie (40) qui conduit à la chambre de combustion (32).

12. Installation selon l'une des revendications précédentes, caractérisée par le fait que c'est à l'intérieur de la zone (24) qu'est disposée la chambre collectrice de gaz (41) destinée à recevoir les gaz brûlés du procédé qui quittent les réacteurs tubulaires (14).

13. Installation selon l'une des revendications précédentes, caractérisée par le fait que c'est à l'intérieur de la zone (22) que les réacteurs tubulaires (14) présentent l'ouverture d'entrée (30) qui est destinée aux gaz du procédé.

14. Installation selon la revendication 13, caractérisée par le fait que l'ouverture d'entrée (30) communique avec la chambre de combustion (32) par l'intermédiaire d'un échangeur de chaleur (64).

15. Procédé pour le traitement thermique continu d'un matériau contenant du carbone dans un four vertical qui comprend au moins deux réacteurs pouvant être chauffés indirectement, des gaz provenant du procédé étant amenés au matériau contenant du carbone en vue du traitement, caractérisé par le fait que les réacteurs (réacteurs tubulaires 14) sont alimentés séparément en matériau contenant du carbone, et par le fait que l'on rassemble les gaz brûlés du procédé de tous les réacteurs tubulaires qui se produisent sous forme gazeuse ou sous forme de vapeur pendant le traitement du matériau contenant du carbone, et que l'on utilise aussitôt leur énergie pour chauffer les réacteurs tubulaires et pour préparer les gaz du procédé.

16. Procédé selon la revendication 15, caractérisé par le fait qu'une pyrolyse ou une activation du matériau contenant du carbone est réalisée dans les réacteurs tubulaires (14).

17. Procédé selon l'une des revendications précédentes, caractérisé par le fait que l'énergie thermique est obtenue dans une chambre de combustion par combustion de gaz brûlés du procédé et/ou de constituants contenus dans les gaz brûlés du procédé.

18. Procédé selon l'une des revendications précédentes, caractérisé par le fait que les gaz brûlés du procédé sont brûlés avec un excès d'air aussitôt après qu'ils ont quitté le four vertical.

19. Procédé selon l'une des revendications précédentes, caractérisé par le fait que l'air est amené à la chambre de combustion d'une manière étagée pendant la combustion des gaz brûlés du procédé et/ou des constituants qui sont contenus dans les gaz brûlés du procédé.

20. Procédé selon l'une des revendications précédentes, caractérisé par le fait que les gaz chauds qui sont produits par la combustion dans la chambre de combustion sont amenés sur les réacteurs tubulaires à l'intérieur du four vertical.

21. Procédé selon l'une des revendications précédentes, caractérisé par le fait que les gaz chauds sont amenés dans le four vertical d'une manière telle qu'un chauffage indirect des réacteurs tubulaires soit réalisé, et que des zones où les températures sont différentes soient atteintes de préférence dans le four vertical, de sorte qu'un séchage et/ou une pyrolyse et/ou une production de charbon actif ont lieu simultanément dans au moins un réacteur tubulaire.

22. Procédé selon l'une des revendications précédentes, caractérisé par le fait que les gaz chauds en excès sont utilisés pour engendrer des gaz du procédé, et en particulier de la vapeur d'activation.

23. Procédé selon l'une des revendications précédentes, caractérisé par le fait que les gaz du procédé traversent à contre-courant le matériau contenant du carbone.

24. Procédé selon l'une des revendications précédentes, caractérisé par le fait que le four vertical ou les réacteurs tubulaires, respectivement, sont alimentés continûment en matériau contenant du carbone.
